# EUROPÄISCHE PATENTSCHRIFT

(11) **EP 1 929 280 B1**
(45) Veröffentlichungstag und Bekanntmachung des Hinweises auf die Patenterteilung: **15.08.2012**
(21) Anmeldenummer: 06791788.0
(22) Anmeldetag: 01.09.2006
(51) Int. Cl.: G01N 21/64, H05B 33/08

(54) **LABORVORRICHTUNG ZUR GLEICHZEITIGEN DURCHFÜHRUNG VON REAKTIONEN IN EINER MEHRZAHL VON PROBEN**
LABORATORY APPARATUS FOR SIMULTANEOUSLY CARRYING OUT REACTIONS IN A PLURALITY OF SAMPLES
DISPOSITIF DE LABORATOIRE POUR REALISER SIMULTANEMENT DES REACTIONS DANS PLUSIEURS ECHANTILLONS

(30) Priorität: 28.09.2005 DE 102005046583
(43) Veröffentlichungstag der Anmeldung: 11.06.2008
(73) Patentinhaber: EPPENDORF AG, 22339 Hamburg (DE)
(72) Erfinder: SCHIRR, Andreas, 22049 Hamburg (DE); ECKERT, Gerd, 22339 Hamburg (DE); LAPCZYNA, Markus, 22041 Hamburg (DE)
(74) Vertreter: Hausfeld, Norbert
(86) Internationale Anmeldenummer: PCT/EP2006/008560
(87) Internationale Veröffentlichungsnummer: WO 2007/036281

(56) Entgegenhaltungen:
- EP-A2- 1 079 667
- WO-A-03/017728
- WO-A-2004/057924
- WO-A2-03/002991
- WO-A2-2005/079121
- DE-A1- 19 749 333
- US-A1- 2003 127 609
- US-B1- 6 207 946

## Beschreibung

Die Erfindung betrifft eine Laborvorrichtung nach dem Oberbegriff des Anspruches 1.

Eine gattungsgemäße Laborvorrichtung kann z.B. eine Vorrichtung zur Durchführung von Nukleinsäureamplifizierungsverfähren (im folgenden PCR-Reaktionen genannt) sein, bei denen die quantitative Bildung der Amplifikationsprodukte (PCR-Produkte) während der PCR-Reaktionen optisch gemessen wird. Diese spezielle Form der PCR wird Real-Time PCR-Reakdon genannt. In der nachfolgenden Beschreibung wird zur besseren Veranschaulichung überwiegend auf solche PCR-Vorrichtungen eingegangen, ohne daß damit eine Einschränkung beabsichtigt ist.

Bei Real-Time PCR-Reaktionen werden in der Regel Probengemische gemessen, die für optische Meßzwecke Fluoreszenzindikatoren enthalten; die nach Anregung mit Licht geeigneter Wellenlänge Fluoreszenzsignale abgeben, deren Intensität abhängig von der Menge an gebildetem PCR-Produkt ist. Üblicherweise läßt sich bei Real-Time PCR-Reaktionen mit fortschreitender Reaktionsdauer die Zunahme der PCR-Produkte über eine Zunahme der Intensität der gemessenen Fluoreszenzsignale verfolgen. Denkbar sind aber auch Messungen in Transmission.

Die Real-Time PCR-Technik ist ausführlich beschrieben in Neusser, Transkript Laborwelt Nr. 2/2000: "Echtzeit-PCR-Verfahren zur Quantifizierung von PCR-Produkten". Auf den Inhalt dieser Quelle wird Bezug genommen, so daß weitere Erläuterungen zu möglichen Fluoreszenzindikatoren und anderen Aspekten dieses Verfahrens nicht notwendig sind.

Die Mehrzahl an Proben, die in solchen gattungsgemäßen Laborvorrichtungen gleichzeitig prozessiert werden, z.B. simultan PCR-Vermehrungszyklen durchlaufen, sind in der Regel in einem Array angeordnet. Ein Thermocycler bringt die Proben z.B. auf die verschiedenen PCR-Temperaturstufen, z.B. mit einem Temperaturgradienten in einer oder mehrerer der Stufen. Für die Beobachtung bzw. Messung der quantitativen Entwicklung der gebildeten PCR-Produkte weist die gattungsgemäße Laborvorrichtung eine Beleuchtungseinrichtung auf, die Licht geeigneter Wellenlänge auf die Proben abstrahlt. Es kann sich bei dieser Lichtquelle z.B. um eine blaue oder weisse Leuchtdiode handeln, andere Alternativen sind z.B. Halogen-Lampen, Xenon-Lampen, Laserdioden, Laser etc.. Es können weiterhin zusätzliche optische Abbildungskomponenten vorgesehen sein, um das Beleuchtungslicht z.B. zu filtern oder auf die Proben abzubilden.

Zur Messung der von den PCR-Produkten erzeugten Lichtsignale, üblicherweise eine Fluoreszenz, ist ein Detektor vorgesehen, der die in Abhängigkeit von einer gemessenen Lichtintensität Meßwerte erzeugt. Es kann auch mehr als ein Detektor vorgesehen sein. Der Detektor kann z.B. ein CCD-Chip oder ein Photomultiplier sein bzw. einen CCD-Chip oder einen Photomultiplier enthalten. Die Lichtintensität nimmt in der Regel mit der Zahl der PCR-Produkte zu. Es sind aber auch Verfahren bekannt, bei denen über eine Fluoreszenzabnahine die Zunahme der PCR-Produkte beobachtet wird.

Die Vorrichtung weist weiterhin in der Regel optische Einrichtungen auf, die einen Strahlengang von der Beleuchtungseinrichtung zu den Reaktionsproben und von dort zu dem Detektor definieren. Diese Optikeinrichtungen umfassen z.B. einen zwischen Beleuchtungseinrichtung und Proben angeordneten dichroitischen Spiegel, der das von der Beleuchtungseinrichtung ausgehende Anregungslicht zu den Proben passieren läßt, und ein aus den optisch angeregten Reaktionsproben emittiertes langwelligeres Fluoreszenzsignal auf den z.B. seitlich angeordneten Detektor reflektiert. Üblicherweise sind noch eine Reihe weiterer optischer Komponenten vorgesehen, z.B. dem Detektor vorgeschaltete Filter, Linsen, etc..

Nicht in allen Proben werden allerdings eine Fluoreszenz oder eine Änderung der Fluoreszenz beobachtbar sein. Ist das mit der PCR zu vermehrende Ausgangsprodukt z.B. in der Probe gar nicht enthalten, wird auch keine Fluoreszenz zu beobachten sein. Es ist bei solchen Proben aber nicht unterscheidbar, ob das Ausbleiben einer Fluoreszenz wirklich vom Fehlen des Ausgangsproduktes herrührt, oder ob eventuell die Anregungslichtquelle defekt ist, die Fluoreszenz also gar nicht angeregt wurde. Beides führt zum gleichen Ergebnis. Dabei wäre es eminent wichtig eindeutig feststellen zu können, warum keine Fluoreszenz beobachtet wird, denn Real-Time PCR-Messungen werden z.B. in der medizinischen Diagnostik eingesetzt. Falschdiagnosen könnten fatale Folgen haben.

Aus der US 2003/0127609 A1 ist eine gattungsgemäße Vorrichtung bekannt, die eine Überwachungseinrichtung aufweist, die die Funktion der Beleuchtungseinrichtung überwachen kann. Diese Überwachungseinrichtung besteht aus einem zusätzlichen Lichtdetektor, der so angeordnet ist, daß er von der Beleuchtungslichtquelle mit Beleuchtungslicht beaufschlagt wird. Wenn dieser zusätzliche Lichtdetektor feststellt, daß kein Beleuchtungslicht auftrifft, wird der Benutzer alarmiert, daß die Beleuchtungslichtquelle defekt ist.

Als nachteilig bei dieser Lösung wird angesehen, daß ein zusätzlicher kostspieliger Detektor benötigt wird, der zudem einigen Platz beansprucht. Die optische Überwachung erscheint auch fehleranfällig, z.B. weil eine korrekte Überwachung sowohl die Vermeidung von Störlicht aus einer anderen Quelle als der Beleuchtungseinrichtung als auch das ungestörte Auftreffen des Beleuchtungslichtes auf den Detektor voraussetzt. Es wird auch als nachteilig angesehen, daß die US 2003/0127609 A1 mit einer einzigen Beleuchtungslichtquelle arbeitet, deren Ausfall das gesamte Gerät unbenutzbar macht.. Zur selektiven Beleuchtung einer einzelnen der Mehrzahl an Proben zur Zeit ist eine mechanisch aufwendige Relativbewegung zwischen Beleuchtungseinrichtung und Proben vorgesehen. In den gezeigten Beispielen wird eine Mikrotiterplatte mechanisch bewegt, in deren Aufnahmen die Proben enthalten sind.

Es sind im Stand der Technik auch Laborvorrichtungen bekannt, die mit mehr als einer Lichtquelle arbeiten. Bei der WO 03/002991 A2 ist z.B. eine Anordnung von Leuchtdioden als Beleuchtungseinrichtung vorgesehen. Dabei ist jeder der Proben eine Leuchtdiode zugeordnet. Eine Überwachung der Leuchtdioden auf einwandfreie Funktion findet nicht statt, so daß hier bei Ausbleiben einer Fluoreszenz keine eindeutige Aussage über die Ursache machbar ist.

Aufgabe der Erfindung ist es, ausgehend vom Stand der Technik eine Laborvorrichtung mit einer einfachen und zuverlässigen Überwachung der Funktion der Beleuchtungseinrichtung bereitzustellen.

Gelöst wird diese Aufgabe mit einer Laborvorrichtung nach den Merkmalen des Anspruchs 1. Weitere vorteilhafte Ausgestaltungen der Erfindung sind in den Unteransprüchen angegeben.

Erfindungsgemäß besteht die Beleuchtungseinrichtung aus mehreren, jeweils einer einzelnen der Mehrzahl der Proben zugeordneten Leuchtdioden, wobei immer nur eine der Leuchtdioden zur Zeit zur Abstrahlung von Beleuchtungslicht angesteuert ist. Die Überwachungseinrichtung weist keine optischen, sondern elektrische Einrichtungen auf, mit denen eine elektrische Funktionsüberprüfung der Leuchtdioden ausführbar ist, wobei die Überwachungseinrichtung weiterhin zur Generierung eines Signals bei Feststellung einer Funktionsstörung einer Leuchtdiode ausgebildet ist. Mit dem Begriff Leuchtdioden sollen auch Laserdioden umfasst sein.

Die Vorzüge der Erfindung bestehen darin, daß eine elektrische Funktionsüberwachung mit einfachen Mitteln ausgeführt werden kann, wobei zu deren Umsetzung eine Vielzahl an alternativen Möglichkeiten bestehen. Es könnte z.B. an jeder der Leuchtdioden gemessen werden, ob z.B. ein Strom durch die Diode fließt oder wie sich z.B. die Spannung über der Diode verhält. Es könnte auch die die Leuchtdiode mit Strom versorgende Einrichtung nach ihren elektrischen Eigenschaften überwacht werden.

Die Laborvorrichtung kann weiterhin vorteilhaft einen Thermocycler aufweisen, der von einer Steuereinrichtung zur Temperierung der Mehrzahl der Proben auf bestimmte Reaktionstemperaturen ansteuerbar ist. Der Termocycler kann mit Vorteil zur Erzeugung eines Temperaturgradienten ansteuerbar sein. Die erfindungsgemäße Laborvorrichtung kann weiterhin zur Durchführung von Real-Time PCR-Reaktionen ausgeführt sein.

Es ist möglich, für jede der Leuchtdioden eine eigene Stromquelle vorzusehen. Mit Vorteil sind alle Leuchtdioden von der selben Stromquelle gespeist. Insbesondere ist von Vorteil, wenn die Stromquelle als Konstantstromquelle ausgeführt ist, und die Überwachungseinrichtung die Ausgangsspannung dieser so ausgebildeten Stromquelle misst. Die Konstantstromquelle hat den Vorteil, daß der Diodenstrom nicht mehr abhängig ist von der Eingangsspannung und vom Spannungsabfall an der Diode. Schaltungen zur Ausführung einer Konstanstromquelle sind im Stand der Technik hinlänglich bekannt.

Zur Berücksichtigung von Verschiebungen der elektrischen Größen z.B. durch Alterungs- oder Drifteffekte der Leuchtdioden die Überwachungseinrichtung mit Vorteil Vergleichseinrichtungen für den Vergleich der gemessenen Ausgangsspannung mit einem vorgegebenen Ausgangsspannungsbereich auf.

Das Signal der Überwachungseinrichtung kann in einfachster Ausgestaltung anzeigen, daß eine Störung der Beleuchtungseinrichtung festgestellt wurde, ohne die defekte Leuchtdiode näher zu identifizieren. Mit einer solch limitierten Information wären alle Meßergebnisse potentiell fehlerbehaftet und daher im Grunde zu verwerfen. Im Hinblick darauf, daß aber für alle den störungsfrei arbeitenden Leuchtdioden zuzuordnenden Proben verwertbare Ergebnisse vorliegen, stellt eine vollständige Verwerfung aller Ergebnisse eine Vergeudung der verwendeten, in der Regel auch kostspieligen Proben und der aufgewendeten Zeit dar. Vorteilhaft ist die Überwachungseinrichtung deshalb zur Generierung eines die funktionsgestörte Leuchtdiode identifizierenden Signals ausgebildet. Wenn eine dezentrale Funktionsüberwachung z.B. durch Überwachung der Gleichstromquelle erfolgt, kann diese Information leicht gewonnen werden, z.B. durch Auswertung der Information, welche Leuchtdiode wann zur Beleuchtung angesteuert worden ist und wann die Funktionsstörung festgestellt wurde, oder z.B. durch der die Leuchtdioden ansteuernden Schalter bei Erkennen der Störung. Diese Auswertung kann z.B. in einer Auswerte- und Steuereinrichtung erfolgen, die sowohl die Steuerintelligenz für die Steuerung der Laborvorrichtung enthält, als auch die Auswerteintelligenz, um die Meßsignale vom Detektor zu empfangen, aufzuzeichnen und auszuwerten. Es können bei Identifizierung der funktionsgestörten Leuchtdiode dann mit Vorteil alle Messungen verwertet werden, bei denen keine Störung aufgetreten ist, während selektiv diejenige Messung verworfen werden kann, bei der die Beleuchtungsdiode eine Funktionsstörung gezeigt hat.

Weiterhin kann bei einer späteren Verwendung der Laborvorrichtung gezielt der Probenplatz ausgespart werden, dem die defekte Leuchtdiode zugeordnet ist, während alle anderen Probenplätze verwendet werden können. Die Laborvorrichtung kann z.B. eine Anzeige aufweisen, auf der die nicht benutzbare Position für den Benutzer angezeigt wird, z.B. durch Anzeige der gestörten Leuchtdiode oder durch Anzeige des zugehörigen Probenplatzes im Array. Die Laborvorrichtung kann also mit dieser Einschränkung weiter benutzt werde, es muß z.B. nicht bis zum Austausch der schadhaften Leuchtdiode z.B. durch einen Servicetechniker gewartet werden.

Die Berücksichtigung einer als fehlerhaft festgestellten Leuchtdiode kann z.B. auch bei Neukalibaration des Gerätes erfolgen oder bei Kalibration des Gerätes auf einen neuen Farbstoff. Es kann z.B. das dieser Leuchtdiode zuzuordnende Meßergebnis bei einer Mittelwertbildung ausgeklammert werden.

Im folgenden soll die Erfindung anhand einer Figur näher erläutert werden, die eine Real-Time PCR-Vorrichtung als Ausführungsbeispiel einer erfindungsgemäßen Laborvorrichtung zeigt.

Die Vorrichtung 10 weist einen schematisch dargestellten üblichen Thermocycler 11 mit Aufnahmen 12 zur Aufnahme einer Mehrzahl von Proben auf. Im Betrieb werden in die Aufnahmen 12 nicht dargestellte Reaktionsgefäße eingesetzt, in denen jeweils ein PCR-Ansatz mit einem Fluoreszenzindikator enthalten ist.

Auf den Thermocycler 11 ist ein Deckelgehäuse 13 aufgesetzt mit einer Beleuchtungseinrichtung mit mehreren Leuchtdioden 14. Es ist jeweils eine Leuchtdiode 14 einer Aufnahme 12 zugeordnet. Vorzugsweise sind die Leuchtdioden 14 arrayförmig angeordnet, wie auch die Aufnahmen 12. Bei der Messung werden die Leuchtdioden 14 vorzugsweise von der Steuer- und Auswerteeinrichtung 50 einzeln so an- und ausgeschaltet, daß immer nur jeweils eine zugeordnete Aufnahme 12 zur Zeit bestrahlt wird.

Ein beispielhafter Lichtweg von einer Leuchtdiode 14 zu einem Detektor 27 ist mit 15, 15' dargestellt. Das Licht 15 wird von der Leuchtdiode 14 abgestrahlt, und kann dann z.B. einen nicht dargestellten Kurzpaßfilter 16 passieren, mit dem langwellige Anteile herausgefiltert werden. Weiterhin kann das Licht 15 von einem ebenfalls nicht dargestellten Linsenarray auf die zugeordnete Aufnahme 12 fokussiert werden. Dabei tritt das Anregungslicht 15 durch einen Strahlteiler 17 hindurch, der in dieser Richtung vorzugsweise möglichst vollständig durchlässig ist.

Vorzugsweise wird als Strahlteiler 17 ein dichroitischer Spiegel eingesetzt, der Anregungslicht 15 mit hoher Effizienz durchläßt, das emittierte längerwellige Fluoreszenzsignal 15' jedoch mit hoher Effizienz reflektiert.

Das von der Leuchtdiode 14 abgestrahlte Licht 15 soll einen in einem PCR-Ansatz in der Aufnahme 12 befindlichen Fluoreszenzindikator anregen. Es muß dazu eine geeignete Wellenlänge aufweisen, um die Fluoreszenz anregen zu können. Nach Anregung emittiert der Fluoreszenzindikator ein Fluoreszenzsignal 15'. Der Strahlteiler 17 ist so beschaffen, daß das auf ihn auftreffende Fluoreszenzsignal 15' zur Seite hin gerichtet reflektiert wird. Die gezeigte optische Anordnung entspricht somit einer typischen 90°-Meßanordnung für Fluoreszenzmessungen.

Das reflektierte Fluoreszenzsignal 15' gelangt dann auf einen Detektor 27, der die Fluoreszenzintensität erfaßt. Dem Detektor 27 sind verschiedene Optikeinrichtungen vorgeschaltet, mit denen das Fluoreszenzsignal 15' auf den Detektor 27 abgebildet werden kann. Im einzelnen umfassen die Optikeinrichtungen mehrere Lichtleitfasern 20 mit Lichteintrittsflächen 21, die jeweils einer Aufnahme 12 bzw. den aus den Aufnahmen 12 emittierten und am Strahlteiler 17 reflektierten Fluoreszenzsignalen 15' zugeordnet sind. Die Lichteintrittsflächen 21 sind vorzugsweise wiederum wie die Leuchtdioden 14 und die Aufnahmen 12 in einem Array angeordnet.

Die Lichtleitfasern 20 sind an ihrem Austrittsende zu einem Bündel 23 zusammengefaßt. Durch die Bündelung wird erreicht, daß die Fluoreszenzsignale aus allen Aufnahmen 12 relativ dicht nebeneinander aus den Austrittsenden der jeweiligen Fasern austreten, nämlich in der Nähe der optischen Achse 28 des Detektors 27. Eine eng begrenzte Austrittsfläche ist bevorzugt, um die austretenden Fluoreszenzlichtstrahlen zu kollimieren, deren Ausbreitungsrichtungen sich nur wenig von Lichtleitfaser zu Lichtleitfaser unterscheiden. Dies ist insbesondere dann von Vorteil, wenn die dem Austrittsende nachfolgenden Filter Interferenzfilter sind, deren spektrale Durchlaßcharakteristik abhängig vom Einfallswinkel auf die Filter sind.

Das Fluoreszenzsignal 15' wird von dem Lichtleiterbündel 23 dann über weitere Optikeinrichtungen, z.B. eine Linse 24, einen Bandpaßfilter 25 und eine weitere Linse 26 auf den Detektor 27 abgebildet. Die Filter können auch automatisiert wechselbar sein, um die Vorrichtung an verschiedene Fluoreszenzindikatoren anzupassen.

Die Leuchtdioden 14 sind alle parallel an eine Gleichstromquelle 30 angeschlossen, die im wesentlichen aus einer Versorgungsspannungsquelle 32 besteht, z.B. einem Netzteil, die mit einer üblichen elektronischen Schaltung 34, z.B. einem gegengekoppeltem Transistor, stromstabilisiert ist. Es sind auch andere Versorgungsspannungsquellen und andere elektronische Schaltung für die Stromstabilisierung möglich.

Der Stromfluß zu jeder der Leuchtdioden 14 wird von jeweils einem zugeordneten Schalter 39, 40 beherrscht, der eine geschlossene und eine offene Stellung einnehmen kann. Die mehreren Schalter 39, 40, die zu einer Schaltereinheit 38 zusammengefaßt sind, werden von der Steuer- und Auswerteeinrichtung 50 mit Steuersignalen geschlossen oder geöffnet. Im gezeigten Beispiel ist Schalter 39 geschlossen und Schalter 40 geöffnet.

Bei Anordnung der Leuchtdioden 14 in einem Array läßt sich die gezielte Ansteuerung jeder einzelnen Leuchtdiode 14 in bevorzugter Weise durch Schalter realisieren, die alle Leuchtdioden einer Spalte bzw. alle Leuchdioden einer Zeile beherrschen. Durch Schließen eines Spaltenschalters und eines Zeilenschalters wird diejenige Leuchtdiode strombeaufschlagt, die sowohl in der ausgewählten Spalte als auch in der ausgewählten Zeile liegt.

Eine Überwachungseinrichtung 45 überwacht die Ausgangsspannung der die Leuchtdioden 14 mit Strom versorgenden Konstantstromquelle 30. Es kann beobachtet werden, daß bei Stromfluß durch eine funktionierende Leuchtdiode die Ausgangsspannung abfällt. Dieser Spannungsabfall ist bei Verwendung gleicher Leuchtdioden für alle im wesentlichen gleich. Unter Berücksichtigung von Alterung und von Drifteffekten kann z.B. ein Spannungsbereich definiert werden, in dem die gemessene Ausgangsspannung liegen sollte, wenn eine funktionierende Leuchdiode strombeaufschlagt wird. Die Überwachungseinrichtung 45 ist kommunizierend mit der Steuer- und Auswerteeinrichtung 50 verbunden. Im gezeigten Auführungsbeispiel erhält die Überwachungseinrichtung 45 Steuersignale, wenn eine der Leuchtdioden 14 angeschaltet wird. Sie misst dann die Ausganggspannung und vergleicht die gemessene Spannung mit einem als zulässig hinterlegten Spannungsbereich. Bei Über- oder Unterschreiten dieses zulässigen Bereiches wird eine Fehlermeldung über die Signalleitung 47 an die Steuer- und Auswerteeinrichtung 50 abgesetzt, die aus dem zeitlichen Auftreten des Fehlersignals oder z.B. aus den Stellungen der Schalter 39, 40 ermittelt, welche Leuchtdiode 14 eine fehlerhafte Ausgangsspannung bewirkt hat und daher als funktionsgestört einzustufen ist. Bei der Auswertung der vom Detektor 27 über Signalleitung 52 erhaltenen Lumineszenzintensitätswerte werden die Ergebnisse, die der Probe entstammen, die der funktionsgestörten Leuchtdiode 24 zuzuordnen ist, nicht berücksichtigt, bzw. als fehlerhaft angezeigt. Weiterhin kann auf einer Anzeigeeinrichtung 55 die funktionsgestörte Leuchtdiode 14 angezeigt werden mit einem Hinweis, das die entsprechend zuzuordnende Aufnahme nicht mehr verwendet werden sollte. Diese Fehlermeldung entfällt, sobald die funktionsgestörte Leuchtdiode 14 ersetzt ist. Die Fehlermeldung kann z.B. graphisch den Probenplatz im Array anzeigen, der der fehlerhaften Leuchtdiode 14 zugeordnet ist, und daher nicht verwendbar ist. Auch ein entsprechender Hinweis kann für den Benutzer lesbar angezeigt werden.

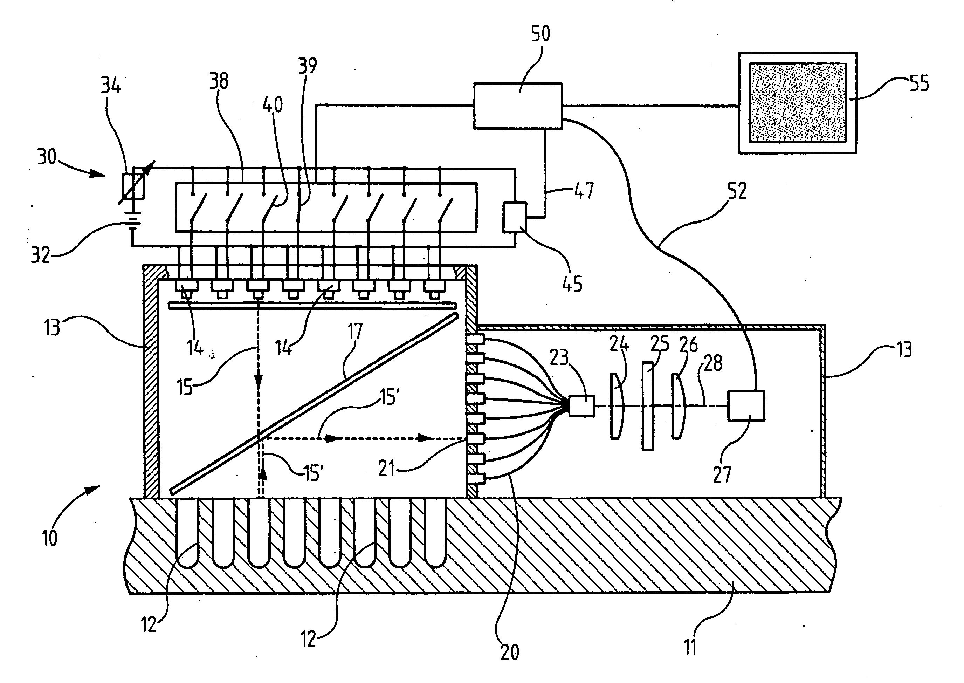

## Patentansprüche

1. Laborvorrichtung (10) zur gleichzeitigen Durchführung von Reaktionen in einer Mehrzahl von Proben, die in einem Array angeordnet sind, mit einer Beleuchtungsvorrichtung (14), die Beleuchtungslicht (15) auf die Proben abstrahlt und mehrere, jeweils einer der Proben zugeordnete Leuchtdioden (14) aufweist, wobei immer nur eine der Leuchtdioden (14) zur Zeit zur Abstrahlung von Beleuchtungslicht angesteuert ist, mit einer Nachweiseinrichtung (27), die ein Signal erzeugt, das von der Lichtintensität des von den Proben kommenden Lichts (15') abhängig ist, wobei die Nachweiseinriehtung (27) das Signal an eine Auswerteeinrichtung (50) weitergibt und mit einer Überwachungseinrichtung (45) zur Funktionsüberprüfung der Beleuchtungsehrichtung (14),
**dadurch gekennzeichnet, dass** alle Leuchtdioden (14) von der selben Stromquelle (30) gespeist sind und die Überwachungseinrichtung (45) elektrische Einrichtungen aufweist, mit denen eine elektrische Funktionsüberprüfung der Leuchtdioden (14) ausführbar ist, wobei die Überwachungseinrichtung (45) zur Generierung eines Signals bei Feststellung einer Funktionsstörung einer Leuchtdiode (14) ausgebildet ist und kommunizierend mit der Auswerteeinrichtung (50) über eine signalleitung (47) verbunden ist, über die an die Auswerteeinrichtung (50) das von der Überwachungseinrichtung (45) generierte Signal bei Feststellung einer Funktionsstörung einer Leuchtdiode (14) abgesetzt wird, wobei die Auswerteeinrichtung (50) aus dem zeitlichen Auftreten des Signals bei Feststellung einer Funktionsstörung einer Leuchtdiode (14) oder aus den Stellungen von Schaltern (39, 40), durch die der Stromfluß zu jeder der Leuchtdioden (14) beherrscht wird, ermittelt, welche Leuchtdiode (14) als funktionsgestört einzustufen ist.

2. Laborvorrichtung (10) nach Anspruch 1, **dadurch gekennzeichnet, dass** die Auswerteeinrichtung (50) bei der Auswertung der von der Nachweiseinrichtung (27) erhaltenen Intensitätswerte Ergebnisse, die der Probe entstammen, die der funktionsgestörten Leuchtdiode (14) zuzuordnen sind, nicht berücksichtigt oder als fehlerhaft anzeigt.

3. Laborvorrichtung (10) nach Anspruch 1 oder 2, **dadurch gekennzeichnet, dass** eine als fehlerhaft, festgestellte Leuchtdiode (14) bei einer NeukalibratioD der Laborrichtung (10) oder der Kalibration der Laborvorrichtung (10) auf einen neuen Farbstoff berücksichtigt wird.

4. Laborvorrichtung (10) nach einem der Ansprüche 1 bis 3, **dadurch gekennzeichnet, dass** das einer als fehlerhaft festgestellten Leuchtdiode (14) zugeordnete Messergebnis bei einer Mittelwertbildung ausgeklammert wird.

## Claims

1. Laboratory facility (10) for simultaneously carrying out reactions in a plurality of samples that are arranged in an array, comprising an illumination facility (14) that emits illumination light (15) at the samples and has multiple light-emitting diodes (14) each of which is assigned to one of the samples, whereby only one of the light-emitting diodes (14) is triggered at any time for emitting illuminating light, comprising a detection facility (27) that generates a signal that depends on the light intensity of the light (15') received from the samples, whereby the detection facility (27) transfers the signal to an analytical facility (50), and comprising a monitoring facility (45) for functional testing of the illuminating facility (14),
**characterised in that** all light-emitting diodes (14) are supplied by the same electrical power source (30) and the monitoring facility (45) comprises electrical devices that can be used to carry out a functional test of the light-emitting diodes (14), whereby the monitoring facility (45) is designed to generate a signal upon detection of a malfunction of a light-emitting diode (14) and is connected in communicating manner to the analytical facility (50) by means of a signal line (47) through which the signal generated by the monitoring facility (45) upon detection of a malfunction of a light-emitting diode (14) is transmitted to the analytical facility (50), whereby the analytical facility (50) uses the time at which the signal occurs upon detection of a malfunction of a light-emitting diode (14) or the position of switches (39, 40) governing the flow of current to each of the light-emitting diodes (14) to determine which light-emitting diode (14) is to be classified to be malfunctioning.

2. Laboratory facility (10) according to claim 1, **characterised in that** the analytical facility (50) does not take into account or displays as erroneous those results that originate from the sample to be assigned to the malfunctioning light-emitting diode (14) during the analysis of the intensity values received from the detection facility (27).

3. Laboratory facility (10) according to claim 1 or 2, **characterised in that** a light-emitting diode (14) that has been determined to be malfunctioning is taken into account in a re-calibration of the laboratory facility (10) or the calibration of the laboratory facility (10) to a new dye.

4. Laboratory facility (10) according to any one of the claims 1 to 3, **characterised in that** the measuring result assigned to a light-emitting diode (14) that has been determined to be malfunctioning is not taken into account in a calculation of a mean value.

## Revendications

1. Dispositif de laboratoire (10) pour réaliser simultanément des réactions dans plusieurs échantillons agencés en grille, avec un dispositif d'éclairage (14) émettant une lumière d'éclairage (15) sur les échantillons et doté de plusieurs diodes électroluminescentes (14) respectivement affectées à l'un des échantillons et commandées de sorte à ce qu'une seule diode (14) à la fois émette une lumière d'éclairage, avec un dispositif de détection (27) qui émet un signal dépendant de l'intensité lumineuse de la lumière (15') provenant des échantillons, le dispositif de détection (27) transmettant le signal à un dispositif d'évaluation (50), et avec un dispositif de surveillance (45) assurant le contrôle fonctionnel du dispositif d'éclairage (14),
**caractérisé en ce que** toutes les diodes électroluminescentes (14) sont alimentées par la même source de courant (30) et **en ce que** le dispositif de surveillance (45) présente des dispositifs électriques permettant d'effectuer un contrôle fonctionnel électrique des diodes électroluminescentes (14), le dispositif de surveillance (45) étant réalisé de façon à générer un signal en cas de défaillance d'une diode électroluminescente (14) et étant relié au dispositif d'évaluation (50) par un conducteur de signaux (47) lequel transmet au dispositif d'évaluation (50) le signal généré par le dispositif de surveillance (45) en cas de constatation d'une défaillance d'une diode électroluminescente (14), le dispositif d'évaluation (50) déterminant alors à partir de l'apparition temporelle du signal généré en cas de constatation d'une défaillance d'une diode électroluminescente (14) ou partant de la position des commutateurs (39, 40) qui commandent le courant appliqué à chacune des diode électroluminescente (14) laquelle des diodes électroluminescentes (14) doit être considérée comme défaillante.

2. Dispositif de laboratoire (10) selon la revendication 1, **caractérisé en ce que**, lors du traitement des valeurs d'intensité provenant du dispositif de détection (27), le dispositif d'évaluation (50) ne tient pas compte des résultats provenant de l'échantillon auquel est affecté la diode électroluminescente (14) défaillante ou les affiche comme étant incorrects.

3. Dispositif de laboratoire (10) selon la revendication 1 ou 2, **caractérisé en ce qu'**une diode électroluminescente (14) repérée comme défaillante est prise en compte lors d'un recalibrage du dispositif de laboratoire (10) ou du calibrage du dispositif de laboratoire (10) en fonction d'un nouveau colorant.

4. Dispositif de laboratoire (10) selon l'une des revendications 1 à 3, **caractérisé en ce que** le résultat de mesure correspondant à une diode électroluminescente (14) repérée comme défaillante n'est pas pris en compte dans le calcul de la valeur moyenne.
